# EUROPÄISCHE PATENTSCHRIFT

(11) **EP 1 375 946 B1**
(45) Veröffentlichungstag und Bekanntmachung des Hinweises auf die Patenterteilung: **17.03.2010**
(21) Anmeldenummer: 02013663.6
(22) Anmeldetag: 20.06.2002
(51) Int. Cl.: F16D 23/14, F16C 33/58, F16C 23/08

(54) **Ausrücker mit einer Einrichtung zum Ausgleich von Ungenauigkeiten in einer Reibungskupplung eines Kraftfahrzeugs**
Release mechanism with a device compensating the irregularities in vehicle friction clutch
Butée de débrayage avec un dispositif pour compenser les irrégularités dans un embrayage à friction d'un véhicule automobile

(43) Veröffentlichungstag der Anmeldung: 02.01.2004
(73) Patentinhaber: ZF Sachs AG, 97424 Schweinfurt (DE)
(72) Erfinder: Reuter, Klaus, Dipl.-Ing.(FH), 97723 Oberthulba (DE)

(56) Entgegenhaltungen:
- EP-A- 0 241 810
- DE-A- 19 912 431
- FR-A- 2 805 579
- US-A- 6 126 324

## Beschreibung

Die Erfindung betrifft einen Ausrücker zur Betätigung einer Reibungskupplung eines Kraftfahrzeuges gemäß dem Oberbegriff von Patentanspruch 1.

Mit der DE 199 12 431 A1 ist eine Ausrückvorrichtung für eine Reibungskupplung eines Kraftfahrzeugs bekannt geworden, die aus einem auf einer Schiebehülse angeordneten als Schrägkugellager ausgeführtem Ausrücklager und einer zur Reibungskupplung gehörigen, mit dem Ausrücklager in Wirkverbindung stehenden Tellerfeder besteht und die folgenden Merkmale aufweist:
- zwischen der Tellerfeder und dem Ausrücklager sind zwei zu einander komplementäre Kugelflächensegmente aufweisende Bereiche vorgesehen;
- beide, die Kugelflächensegmente aufweisenden Bereiche sind mittelbar oder unmittelbar an der Tellerfeder vorgesehen;
- die Kugelflächensegmente bildenden Bereiche sind gegen das Ausrücklager radial verschiebbar.

Die derart durch Kugelflächensegmente verbundenen Bereiche sind teilweise von den Zungen an der Tellerfeder gebildet beziehungsweise zwischen der Tellerfeder und einem als Anpressplatte des Ausrücklagers vorgesehenen Flanschteil angeordneten Ausgleichsring gegeneinander verschiebbar angeordnet. Außerdem sind die Kugelflächen an den Ringen vorwiegend durch einen Schleifprozess angeformt, wodurch Kosten entstehen, die sich auf die Herstellung und das Material der Ringe beziehen.

Die EP 0 241 810 A1 beschreibt ein pendelfähiges Radialkugellager, wobei die Laufbahn des Innenrings oder des Außenrings mit einem in Umfangsrichtung variierenden Laufbahnradius ausgeführt ist. Dabei ist die entsprechende Laufbahn so konturiert, dass diese die darin laufenden Kugeln an zwei einander diametral gegenüberliegenden Stellen mit nur geringem Spiel berührt, während an zwei anderen Stellen, die in Umfangsrichtung zwischen den erstgenannten Stellen liegen, die Laufbahnkontur gegenüber der Kugelkontur deutlich verbreitert ist. Zwischen den Extremstellen geht die Laufbahn kontinuierlich von der einen in die andere Stelle über.

Die vorliegende Erfindung hat es sich somit zur Aufgabe gemacht, einen Ausrücker zur Betätigung einer Ausrückfeder einer Reibungskupplung eines Kraftfahrzeugs zu schaffen, der eine Einrichtung zum Ausgleich eines Schrägstandes der Mittelachse der Reibungskupplung zu der Mittelachse einer Führungshülse und/oder zum Ausgleich eines Taumelschlages der Ausrückfeder aufweist, ohne nennenswerten Bauraum zu beanspruchen und Kosten zu verursachen.

Die Aufgabe wird bei einem Ausrücker der eingangs genannten Art durch die im Kennzeichen des Hauptanspruchs aufgeführten Merkmale gelöst. Ausgestaltungen und Weiterbildungen der Erfindung sind den Unteransprüchen zu entnehmen.

Gemäß der Erfindung ist das Ausrücklager als pendelfähiges Schrägkugellager ausgebildet, wobei eine der Laufbahnen einen ringförmigen Bereich mit einem ersten Laufbahnradius und einen weiteren, sich daran axial anschließenden ringförmigen Bereich mit einem zweiten Laufbahnradius umfasst. Dabei weist der erste Laufbahnradius gegenüber den Kugeln eine bei Schrägkugellagern übliche Schmiegung auf, wo hingegen der zweite Laufbahnradius mit einer wesentlich geringeren Schmiegung für die Kugeln ausgebildet ist.

Gemäß einer vorteilhaften Ausführungsform hat der zweite Laufbahnradius seinen Ausgangspunkt auf der Mittelachse der Führungshülse. Daraus geht hervor, dass es sich bei der Ringfläche, die durch den zweiten Laufbahnradius gebildet wird, um eine Kugel-Segmentfläche handelt, die in ihrer Funktion ein Kugelgelenk für den Innenring darstellt. Als pendelfähiges Schrägkugellager kann der Innenring des Ausrücklagers somit auf einen Taumelschlag der Ausrückfeder reagieren, indem der Innenring den ungenau umlaufenden Zungen folgt, wobei die Kugeln in der Kugel-Segmentfläche des ersten Laufbahnradius nicht in einer senkrecht zur Mittelachse der Führungshülse liegenden Ebene abrollen, sondern in einer schräg zu dieser verlaufenden Spur. Diese nach beiden Seiten pendelnde Spur kann maximal bis zu einem bestimmten Auslenkwinkel ausschlagen, wobei die Breite der Kugel-Segmentfläche durch die angrenzenden Hälften des zweiten Laufbahnradius bestimmt wird. Die Kräfte der Kugeln auf die Kugel-Segmentfläche sind abhängig von der Lage des zweiten Laufbahnradius wobei sich ein Lagerdruckwinkel ergibt, der um so kleiner wird, je näher der Ausgangspunkt des zweiten Laufbahnradius an das Ausrücklager heran rückt.

Außerdem wird gemäß einer Weiterbildung der vorliegenden Erfindung ein Ausrücker mit einer Einrichtung zum Ausgleich eines Versatzes der Mittelachse der Reibungskupplung zu der Mittelachse der Führungshülse vorgeschlagen, die eine Gleitfläche zwischen dem Ausrücklager und der Schiebehülse in der Ebene senkrecht zur Mittelachse der Führungshülse aufweist, wobei das Ausrücklager auf dieser Gleitfläche gegenüber der Schiebehülse in bestimmten Grenzen aus seiner koaxialen Position zur Führungshülse verschoben werden kann. Dabei entsteht durch eine federnde Verbindung des Ausrücklagers mit der Schiebehülse durch eine Klammer eine Haftreibung, die das außer Mitte geratene Ausrücklager stabilisiert. An der Gleitfläche der Schiebehülse kann weiterhin ein ringförmiger Anschlag angeordnet sein, der die Auslenkung des Außenrings aus seiner Mittellage begrenzt.

Anhand zweier Zeichnungen wird ein Ausführungsbeispiel eines Ausrückers mit zwei Einrichtungen zum Ausgleich von Laufungenauigkeiten zwischen der Ausrückfeder und dem Ausrücker erläutert. Es zeigen
- Fig.1: einen Ausrücker mit einer Schiebehülse und einem Ausrücklager mit einem Außenring und einem Innenring sowie mit einer gemeinsamen Gleitfläche zwischen dem Außenring und der Schiebehülse in einer Ebene senkrecht zur Mittelachse der Schiebehülse im Schnitt;
- Fig.2: den Außenring mit einer aus mehreren Segmenten bestehenden Laufbahn im Teilschnitt.

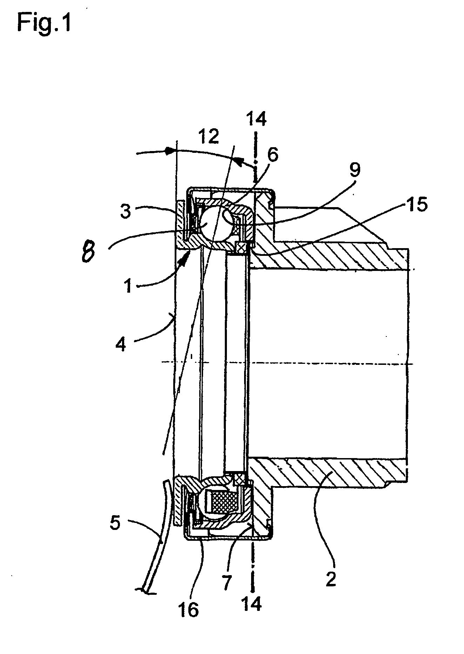

Fig.1 zeigt einen Ausrücker zum Betätigen einer Reibungskupplung über eine Ausrückfeder 5, wobei der Ausrücker ein Ausrücklager 1 aufweist, das ein Kugellager mit einem Innenring 3, Kugeln 8 und einem Außenring 6 ist, wobei der Innenring 3 mit einer Anlagefläche 4 an den Zungen der Ausrückfeder 5 anliegt. Der Außenring 6 hat in einer quer zur Mittelachse des Ausrücklagers 1 verlaufenden Ebene 14 eine Gleitfläche 7 unmittelbar oder mittelbar gemeinsam mit einer Schiebehülse 2, die einen ringförmigen Anschlag 15 für den Außenring 6 des Ausrücklagers 1 aufweist. Eine Klammer 16 verbindet das Ausrücklager 1 mit der Schiebehülse 2 zu einer Baueinheit.

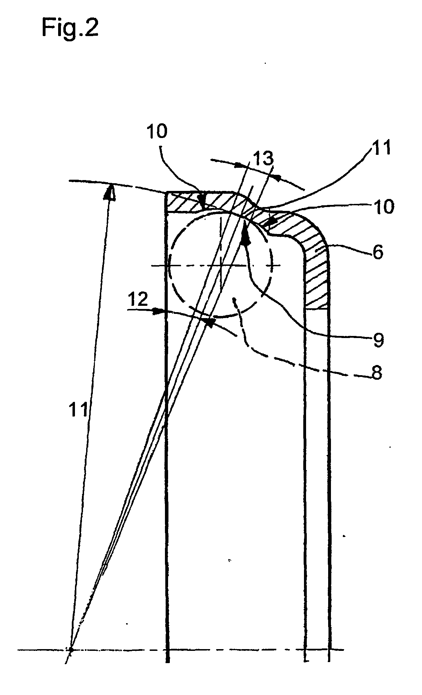

Gemäß Fig. 2 weist der Außenring 6 eine Laufbahn 9 auf, die aus einem äußeren ringförmigen Bereich mit einem ersten Laufbahnradius 10, einem mittleren ringförmigen Bereich mit einem zweiten Laufbahnradius 11 und einem inneren ringförmigen Bereich wieder mit dem ersten Laufbahnradius 10 besteht. Die Kugeln 8 können sich bei ihrem Umlauf im Außenring 6 innerhalb eines Auslenkwinkels 13 bewegen, wobei sie in einer herkömmlichen Laufbahn im Innenring 3 geführt werden.

Der Vorteil der Erfindung besteht darin, dass nur die Laufbahn 9 für die Kugeln 8 vorzugsweise im Außenring 6 verändert werden muss, um dort neben einem ersten Laufbahnradius 10 einen zweiten Laufbahnradius 11 unter Bildung eine Kugel-Segmentfläche einzuarbeiten, in welcher ein Winkelausgleich zwischen der Ausrückfeder 5 und dem Ausrücklager 1 stattfindet. Da die Laufbahn 9 im Außenring 6 ohnehin mit hoher Genauigkeit angefertigt werden kann und der Wälzkontakt durch Fett geschmiert und mit Dichtungen zur Umgebung abgedichtet ist, sind keine zusätzlichen Bauteile am Ausrücker nötig und keine weitere Reibstelle zu schmieren und abzudichten.

### Bezugszeichenliste

- 1: Ausrücklager
- 2: Schiebehülse
- 3: Innenring
- 4: Anlagefläche
- 5: Ausrückfeder
- 6: Außenring
- 7: Gleitfläche
- 8: Kugel
- 9: Laufbahn
- 10: Erster Laufbahnradius (Schmiegradius)
- 11: Zweiter Laufbahnradius
- 12: Lagerdruckwinkel
- 13: Auslenkwinkel
- 14: Ebene
- 15: Anschlag
- 16: Klammer

## Patentansprüche

1. Ausrücker zur Betätigung einer Reibungskupplung eines Kraftfahrzeuges, umfassend ein als Schrägkugellager ausgeführtes Ausrücklager (1) mit einem Innenring (3) und einem Außenring (6), welche jeweils eine Laufbahn für Kugeln (8) aufweisen und weiter umfassend eine Schiebehülse (2), wobei einer der Ringe (3; 6) mit einer Ausrückfeder der Reibungskupplung und der andere Ring (6; 3) mit der Schiebehülse (2) in Wirkverbindung steht und wobei der Ausrücker eine Einrichtung zum Ausgleich eines Schrägstandes der Mittelachse der Reibungskupplung zu der Mittelachse einer Führungshülse des Ausrückers und/oder eines Taumelschlages der Ausrückfeder aufweist,
**dadurch gekennzeichnet,**
**dass** das Ausrücklager (1) als pendelfähiges Schrägkugellager ausgebildet ist, wobei eine der Laufbahnen (9) einen ringförmigen Bereich mit einem ersten Laufbahnradius (10) und einen weiteren, sich daran axial anschließenden ringförmigen Bereich mit einem zweiten Laufbahnradius (11) umfasst und wobei der erste Laufbahnradius (10) gegenüber den Kugeln (8) eine bei Schrägkugellagern übliche Schmiegung aufweist, wo hingegen der zweite Laufbahnradius (11) mit einer wesentlich geringeren Schmiegung für die Kugeln (8) ausgebildet ist.

2. Ausrücker nach Anspruche 1,
**dadurch gekennzeichnet,**
**dass** die Laufbahn (9) mit den Laufbahnradien (10, 11) sowohl am Innenring (3), als auch am Außenring (6) ausgeführt sein kann.

3. Ausrücker nach Anspruch 1 oder 2,
**dadurch gekennzeichnet,**
**dass** der erste Laufbahnradius (10) durch den zweiten Laufbahnradius (11) unterbrochen ist, wobei der Ausgangspunkt des zweiten Laufbahnradius (11) auf der Mittelachse einer Führungshülse der Schiebehülse (2) angeordnet ist

4. Ausrücker nach einem der Ansprüche 1 bis 3,
**dadurch gekennzeichnet,**
**dass** die Laufbahn (9) mit den Laufbahnradien (10, 11) am Außenring (6) angeordnet ist und entlang dem zweiten Laufbahnradius (11) die Form einer Kugel-Segmentfläche aufweist, die in ihrer Breite durch einen Auslenkwinkel (13) bestimmt wird, um den der Innenring (3) pendeln kann

5. Ausrücker nach einem der Ansprüche 1-4,
**dadurch gekennzeichnet,**
**dass** der Ausrücker eine zweite Einrichtung zum Ausgleich eines Versatzes der Mittelachse der Reibungskupplung zu der Mittelachse einer Führungshülse der Schiebehülse (2) umfasst, die aus einer Gleitfläche (7) zwischen dem Ausrücklager (1) und der Schiebehülse (2) in einer Ebene (14) senkrecht zur Mittelachse der Führungshülse besteht, wobei das Ausrücklager (1) auf dieser Gleitfläche (7) gegenüber der Schiebehülse (2) in bestimmten Grenzen aus seiner koaxialen Position zur Führungshülse verschoben werden kann.

6. Ausrücker nach Anspruch 5,
**dadurch gekennzeichnet,**
**dass** die Gleitfläche (7) der Schiebehülse (2) mit der Gleitfläche (7) am Außenring (6) mittelbar oder unmittelbar zusammenwirkt.

7. Ausrücker nach einem der Ansprüche 1-6,
**dadurch gekennzeichnet,**
**dass** der Versatz des Ausrücklagers (1) gegenüber der Mittelachse der Schiebehülse (2) im Bereich der Gleitfläche (7) durch einen Anschlag (15) begrenzt ist.

## Claims

1. Clutch operator for actuating a friction clutch of a motor vehicle, comprising a disengagement bearing (1) which is configured as an angular-contact ball bearing having an inner ring (3) and an outer ring (6) which each have a raceway for balls (8), and further comprising a sliding sleeve (2), one of the rings (3; 6) being operatively connected to a disengagement spring of the friction clutch and the other ring (6; 3) being operatively connected to the sliding sleeve (2), and the clutch operator having a device for compensating for an oblique position of the centre axis of the friction clutch with respect to the centre axis of a guide sleeve of the clutch operator and/or for a tumble of the disengagement spring, **characterized in that** the disengagement bearing (1) is configured as a self-aligning angular-contact ball bearing, one of the raceways (9) comprising an annular region having a first raceway radius (10) and a further annular region which adjoins the former axially and has a second raceway radius (11), and the first raceway radius (10) having an osculation with respect to the balls (8) which is customary in angular-contact ball bearings, whereas the second raceway radius (11) is configured with a substantially greater osculation for the balls (8).

2. Clutch operator according to Claim 1, **characterized in that** the raceway (9) can be configured with the raceway radii (10, 11) both on the inner ring (3) and on the outer ring (6).

3. Clutch operator according to Claim 1 or 2, **characterized in that** the first raceway radius (10) is interrupted by the second raceway radius (11), the starting point of the second raceway radius (11) being arranged on the centre axis of a guide sleeve of the sliding sleeve (2).

4. Clutch operator according to one of Claims 1 to 3, **characterized in that** the raceway (9) is arranged with the raceway radii (10, 11) on the outer ring (6) and, along the second raceway radius (11), has the shape of a ball segment face, the width of which is defined by a deflection angle (13), by which the inner ring (3) can swing.

5. Clutch operator according to one of Claims 1 to 4, **characterized in that** the clutch operator comprises a second device for compensating for an offset of the centre axis of the friction clutch with respect to the centre axis of a guide sleeve of the sliding sleeve (2) which comprises a sliding face (7) between the disengagement bearing (1) and the sliding sleeve (2) in a plane (14) perpendicularly with respect to the centre axis of the guide sleeve, it being possible for the disengagement bearing (1) to be displaced out of its coaxial position with respect to the guide sleeve on this sliding face (7) with respect to the sliding sleeve (2) within defined limits.

6. Clutch operator according to Claim 5, **characterized in that** the sliding face (7) of the sliding sleeve (2) interacts indirectly or directly with the sliding face (7) on the outer ring (6).

7. Clutch operator according to one of Claims 1 to 6, **characterized in that** the offset of the disengagement bearing (1) with respect to the centre axis of the sliding sleeve (2) is limited in the region of the sliding face (7) by a stop (15).

## Revendications

1. Butée de débrayage pour la commande d'un embrayage à friction d'un véhicule automobile, comprenant un palier de débrayage (1) réalisé sous forme de roulement à billes à contact oblique avec une bague interne (3) et une bague externe (6), qui présentent chacune un chemin de roulement pour des billes (8), et comprenant en outre un manchon coulissant (2), l'une des bagues (3 ; 6) étant en liaison fonctionnelle avec un ressort de débrayage de l'embrayage à friction et l'autre bague (6 ; 3) étant en liaison fonctionnelle avec le manchon coulissant (2), et la butée de débrayage présentant un dispositif pour compenser une position oblique de l'axe médian de l'embrayage à friction par rapport à l'axe médian d'un manchon de guidage de la butée de débrayage et/ou d'un décalage latéral du ressort de débrayage,
**caractérisée en ce que**
le palier de débrayage (1) est réalisé sous forme de roulement à billes à contact oblique pendulaire, l'un des chemins de roulement (9) comprenant une région annulaire avec un premier rayon de chemin de roulement (10) et une région supplémentaire annulaire s'y raccordant axialement avec un deuxième rayon de chemin de roulement (11), et le premier rayon de chemin de roulement (10) présentant, par rapport aux billes (8), une conformité usuelle pour des roulements à billes à contact oblique, tandis que le deuxième rayon de chemin de roulement (11) est réalisé avec une conformité nettement plus faible pour les billes (8).

2. Butée de débrayage selon la revendication 1,
**caractérisée en ce que**
le chemin de roulement (9) avec les rayons de chemin de roulement (10, 11) peut être réalisé à la fois sur la bague interne (3) et sur la bague externe (6) .

3. Butée de débrayage selon la revendication 1 ou 2,
**caractérisée en ce que**
le premier rayon de chemin de roulement (10) est interrompu par le deuxième rayon de chemin de roulement (11), le point de départ du deuxième rayon de chemin de roulement (11) étant disposé sur l'axe médian d'un manchon de guidage du manchon coulissant (2).

4. Butée de débrayage selon l'une quelconque des revendications 1 à 3,
**caractérisée en ce que**
le chemin de roulement (9) avec les rayons de chemin de roulement (10, 11) est disposé sur la bague externe (6) et présente le long du deuxième rayon de chemin de roulement (11) la forme d'une surface segmentée sphérique qui est définie dans sa largeur par un angle de déviation (13) autour duquel la bague interne (3) peut osciller.

5. Butée de débrayage selon l'une quelconque des revendications 1 à 4,
**caractérisée en ce que**
la butée de débrayage comprend un deuxième dispositif pour la compensation d'un décalage de l'axe médian de l'embrayage à friction par rapport à l'axe médian d'un manchon de guidage du manchon coulissant (2), qui se compose d'une surface de glissement (7) entre le palier de débrayage (1) et le manchon coulissant (2) dans un plan (14) perpendiculaire à l'axe médian du manchon de guidage, le palier de débrayage (1) pouvant être déplacé sur cette surface de glissement (7) par rapport au manchon coulissant (2) dans des limites définies de sa position coaxiale vers le manchon de guidage.

6. Butée de débrayage selon la revendication 5,
**caractérisée en ce que**
la surface de glissement (7) du manchon coulissant (2) coopère directement ou indirectement avec la surface de glissement (7) sur la bague externe (6).

7. Butée de débrayage selon l'une quelconque des revendications 1 à 6,
**caractérisée en ce que**
le décalage du palier de débrayage (1) par rapport à l'axe médian du manchon coulissant (2) est limité dans la région de la surface de glissement (7) par une butée (15).
